# EUROPEAN PATENT SPECIFICATION

(11) **EP 2 494 835 B1**
(45) Date of publication and mention of the grant of the patent: **29.10.2014**
(21) Application number: 10770659.0
(22) Date of filing: 23.09.2010
(51) Int. Cl.: H04L 1/18, H04W 72/04, H04W 74/08, H04L 1/00

(54) **Radio terminal and method for reporting downlink interference in a radio communication system**
Mobilfunkendgerät und Verfahren zur Meldung von Downlink-Interferenzen in einem Funkkommunikationssystem
Terminal utilisateur radio et procédé de signalement d'une interférence en liaison descendante dans un système de communication radio

(30) Priority: 27.10.2009 GB 0918792
(43) Date of publication of application: 05.09.2012
(73) Proprietor: Motorola Solutions, Inc., Schaumburg, IL 60196 (US)
(72) Inventor: DYSON, Dean, S., Basingstoke Hampshire RG24 8XF (GB)
(74) Representative: Treleven, Colin
(86) International application number: PCT/US2010/049997
(87) International publication number: WO 2011/056316

(56) References cited:
- EP-A2- 2 031 932
- WO-A2-2008/051466
- US-A1- 2009 201 871

## Description

### FIELD OF THE DISCLOSURE

The present disclosure relates generally to radio communication systems and more particularly to a method of reporting downlink interference in a radio communication system.

### BACKGROUND

In radio communication systems, communications between two stations are susceptible to the effects of radio frequency (RF) interference. In particular, in radio communication systems employing frequency division duplex (FDD) protocol, RF interference can either affect communication (uplink) from a radio terminal to a base station or communication (downlink) from a base station to the radio terminal. In general, RF interference affecting communication from a radio terminal to any station in the uplink is known as uplink interference and RF interference affecting communication from any station in the downlink to a radio terminal is known as downlink interference.

Uplink interference generally has single user impact as it affects the ability for the radio to transmit to the system. In group communications, uplink interference may not have any effect on radios receiving group calls as long as the radio is not roaming. Radio communication systems employ procedures to detect uplink interference to take corrective actions. It is relatively easy to implement detection mechanisms for uplink interference as the base station can assess uplink channels to look for interference signatures.

Downlink interference has multi-user impact as most radios are either on a receive side of a group call or radios are idle receiving the control channel. In case of downlink interference, transmitting radios are also affected since transmitting radios need to listen to downlink channels to assess permissions to transmit on the uplink channel. In an environment where there are many users on a cell representing a given coverage area, or a specific channel, there is a likelihood of causing control channel congestion. For example, if there are one hundred (100) radios on a cell and strong downlink interference is present for time duration of one and a half (1.5) seconds, then all one hundred (100) radios may decide at the same time to re-register on this cell or a neighbor cell. However, the same time one and a half (1.5) seconds of uplink interference would more likely affect only a handful of radios. Further, downlink interference can cause serious system congestion with the roaming it triggers. It is less easy for radio communication systems to employ detection mechanisms for downlink interference. Existing detection mechanisms use base stations to send test signals to specific radio terminals to request radio terminals to feedback reports. However, sending of test signals from base stations to radio terminals wastes the bandwidth. Further, since existing detection mechanisms rely on a subset of radio terminals in a given coverage to feedback interference reports, there is a difficulty to analyze the overall interference impact in a given area. EP-A-2031932 provides a radio communication system. In EP '932, fixed or mobile subscriber stations may use a shared channel to report a connection quality to a base station.

### SUMMARY OF THE INVENTION

In accordance with a first aspect of the invention, a method of reporting downlink interference having the steps of appended claim 1 is provided. In accordance with a second aspect of the invention, a radio terminal having the features of appended claim 12 is provided.

### BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a block diagram of a radio communication system for employing a method of reporting downlink interference in accordance with some embodiments.
FIG. 2 is a block diagram illustrating internal components of a radio terminal employed in the radio communication system shown in FIG. 1.
FIG. 3 is a flowchart of a method for reporting downlink interference in a radio communication system in accordance with some embodiments.
FIG. 4 is a flowchart of a method for reporting downlink interference in a radio communication system in accordance with some embodiments.
FIG. 5 shows one example implementation of a channel mapping that facilitates reporting of downlink interference in a radio communication system.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

A radio communication system comprises a base station and a plurality of radio terminals transmitting radio signals on an uplink channel to the base station and receiving radio signals from the base station on a downlink channel. The radio terminals are provided with information related to designated slots of an uplink channel, where the designated slots enable the radio terminal to report interference to the base station. The radio terminals further monitor radio signals on the downlink channel and detect interference in the downlink channel. Next, the radio terminals determine whether the interference in the downlink channel reaches a predetermined interference threshold, and report the interference on designated slots of the uplink channel when the interference reaches the predetermined interference threshold.

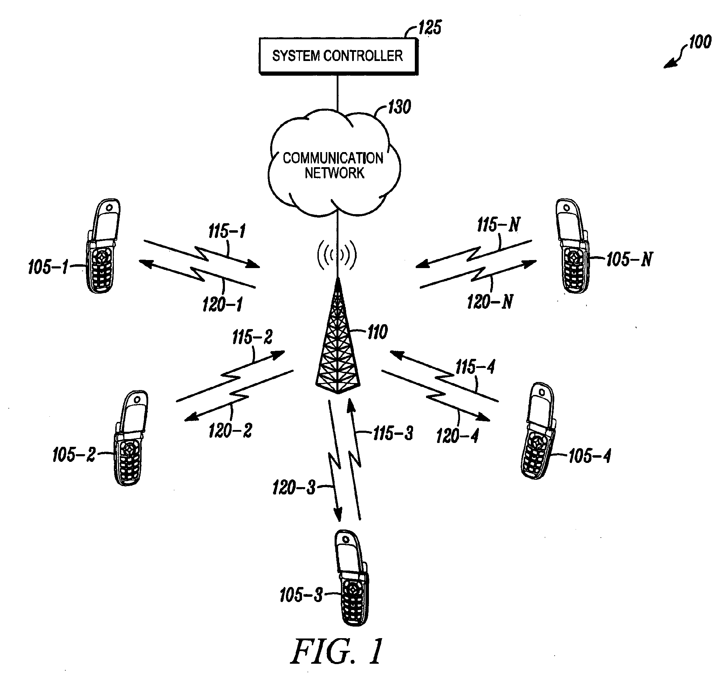

FIG. 1 is a block diagram illustrating a radio communication system 100 employing a method of reporting downlink interference in accordance with some embodiments. The radio communication system 100 includes a plurality of radio terminals 105, for example, radio terminals 105-1 through 105-n. The radio terminals 105 wirelessly communicate with each other via one or more infrastructure devices, shown as base station 110 in FIG. 1. The radio terminals 105 can include one or more types of communication devices, such as mobile telephones, laptops, notebook computers, personal digital assistants, or the like. For example, in FIG. 1, the radio terminals 105-1 through 105-n are illustrated as a mobile device, which is often carried by its user, and thus, remains conveniently available. The base station 110 is a wireless communication station installed at a fixed location of the radio communication system 100. The base station 110 is also referred to as a radio base station or Node B (in 3rd Generation based networks), or eNB (in Long Term Evolution (LTE) based networks), or access point base station (Institute of Electrical and Electronics Engineers (IEEE) 802.11 networks). The IEEE standards or specifications referred to herein may be obtained at http://standards.ieee.org/getieee802/index.html or by contacting the IEEE at IEEE, 445 Hoes Lane, PO Box 1331, Piscataway, NJ 08855-1331, USA. The LTE specifications may be obtained from http://www.3gpp.org/.

In accordance with some embodiments, the radio terminals 105 transmit radio signals to the base station 110 on a first frequency channel known as uplink channel 115, and the base station 110 transmit radio signals to the radio terminals 105 on a second frequency channel (different from the first frequency channel) known as downlink channel 120. In FIG. 1, each of the radio terminals 105-1 through 105-n transmit radio signals to the base station 110 via uplink channels 115-1 through 115-n, respectively. Although, the uplink channels 115-1 through 115-n are shown in FIG. 1 as separate channels, the uplink channels 115-1 through 115-n can be implemented as a common uplink channel which is accessed by radio terminals 105-1 through 105-n on a random basis. The base station 110 transmit radio signals to the radio terminals 105-1 through 105-n via downlink channels 120-1 through 120-n, respectively.

In accordance with some embodiments, each of the radio terminals 105 is configured to report interference detected in the downlink channel 120 to the base station 110 via uplink channel 115. The base station 110 receives interference reports from the radio terminals 105-1 through 105-n and optionally sends collected interference reports to a system controller 125 via a communication network 130. The system controller 125 can use such collected interference reports to take appropriate action. For example, the system controller 125 can process the information in the collected interference reports to prevent/mitigate occurrence of such RF downlink interference in the future. The communication network 130 includes one or more of private networks, public networks, such as the Internet, wireless networks, such as satellite and cellular networks, local area networks (LANs), wide area networks (WANs), telephone networks, such as the Public Switched Telephone Networks (PSTN), or a combination of networks.

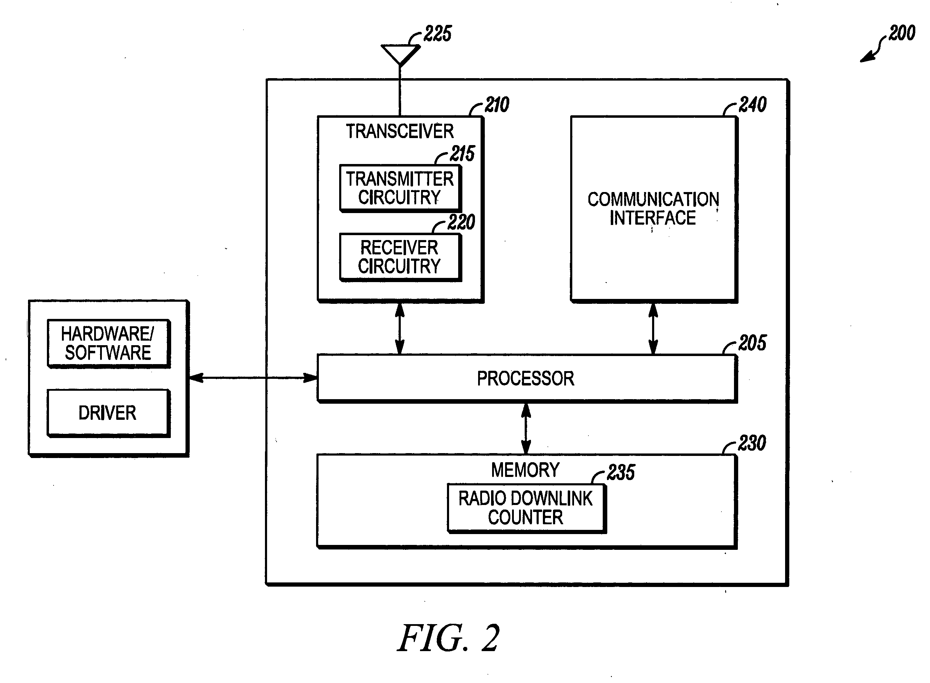

FIG. 2 is a block diagram of a radio terminal 105 illustrating the internal components according to one embodiment. The radio terminal 105 can be implemented in radio terminals 105-1 through 105-n of radio communication system 100. The radio terminal 105 includes a processor 205, a transceiver 210 including a transmitter circuitry 215 and a receiver circuitry 220, an antenna 225, a memory 230 for storing operating instructions that are executed by the processor 205, and a communication interface 240. Although not shown, the radio terminal 105 also can include an antenna switch, duplexer, circulator, or other highly isolative means (not shown) for intermittently providing radio signals from the transmitter circuitry 215 to the antenna 225 and from the antenna 225 to the receiver circuitry 220. The radio terminal 105 is an integrated unit containing at least all the elements depicted in FIG. 2, as well as any other elements necessary for the radio terminal 105 to perform its particular electronic function. Alternatively, the radio terminal 105 can comprise a collection of appropriately interconnected units or devices, wherein such units or devices perform functions that are equivalent to the functions performed by the elements of the radio terminal 105.

The processor 205 includes one or more microprocessors, microcontrollers, DSPs (digital signal processors), state machines, logic circuitry, or any other device or devices that process information based on operational or programming instructions. Such operational or programming instructions are stored in the memory 230. The memory 230 can be an IC (integrated circuit) memory chip containing any form of RAM (random-access memory) or ROM (read-only memory), a floppy disk, a CD-ROM (compact disk read-only memory), a hard disk drive, a DVD (digital video disc), a flash memory card, external subscriber identity module (SIM) card or any other medium for storing digital information. One of ordinary skill in the art will recognize that when the processor 205 has one or more of its functions performed by a state machine or logic circuitry, the memory 230 containing the corresponding operational instructions can be embedded within the state machine or logic circuitry. The operations performed by the processor 205 and the other elements of the radio terminal 105 are described in detail below.

The transmitter circuitry 215 and the receiver circuitry 220 enable the radio terminal 105 to communicate radio signals to and acquire signals from the base station 110. In this regard, the transmitter circuitry 215 and the receiver circuitry 220 include appropriate, conventional circuitry to enable digital or analog transmissions over a wireless communication channel. The implementations of the transmitter circuitry 215 and the receiver circuitry 220 depend on the implementation of the radio terminal 105. For example, the transmitter circuitry 215 and the receiver circuitry 220 can be implemented as an appropriate wireless modem, or as conventional transmitting and receiving components of two-way wireless communication devices. In the event that the transmitter circuitry 215 and the receiver circuitry 220 are implemented as a wireless modem, the modem can be internal to the radio terminal 105 or insertable into the radio terminal 105 (e.g., embodied in a wireless radio frequency (RF) modem implemented on a Personal Computer Memory Card International Association (PCMCIA) card). For a wireless communication device, the transmitter circuitry 215 and the receiver circuitry 220 are implemented as part of the wireless device hardware and software architecture in accordance with known techniques. One of ordinary skill in the art will recognize that most, if not all, of the functions of the transmitter circuitry 215 and/or the receiver circuitry 220 can be implemented in a processor, such as the processor 205. However, the processor 205, the transmitter circuitry 215, and the receiver circuitry 220 have been artificially partitioned herein to facilitate a better understanding.

The receiver circuitry 220 is capable of receiving radio frequency (RF) signals from at least one frequency band and optionally multiple frequency bands, when, for example, the communications with a proximate device are in a frequency band other than that of the network communications. The transceiver 210 includes one set of transmitter circuitry 215. The antenna 225 comprises any known or developed structure for radiating and receiving electromagnetic energy in the frequency range containing the wireless carrier frequencies. The communication interface 240 uses transceiver 210 to enable the radio terminal 105 to communicate with other devices and/or systems. For example, the communication interface 240 may include mechanisms for communicating with another device or system via a network.

As illustrated in FIG. 2, the memory 230 stores and maintains a radio downlink counter (RDC) 235. The radio terminal 105 uses the radio downlink counter 235 to track the level of downlink interference. As used herein, the term "radio downlink counter" refers to a counter that is updated (incremented or decremented) based on the duration of occurrence of interference on the downlink channel 120. In accordance with embodiments of the present invention, the radio terminal 105 decides a time at which the downlink interference is to be reported on an uplink channel based on the radio downlink counter 235 maintained by the memory 230. When the radio terminals 105 power up and/or initiates communication, the radio downlink counter 235 is set to a predetermined value (default value), and based on the duration of occurrence of interference on the downlink channel 120, the radio terminals 105 decrement the RDC 235 by a value. If the RDC 235 reaches a first predefined value, the radio terminals 105 detect a first interference level of downlink interference and report the first interference level of downlink interference on the downlink channel 120 using its uplink channel 115. If the RDC 235 reaches a second predefined value, the radio terminals 105 detect a second interference level of downlink interference and report the second interference level of downlink interference on the downlink channel 120 using its uplink channel 115.

For example, in radio communication systems 100 employing Terrestrial Trunked Radio (TETRA) standards, the default value of the radio downlink counter 235 can be set to four hundred and thirty two (432). The TETRA standards or specifications referred to herein may be obtained at
http://webapp.etsi.org/WorkProgram/SimpleSearch/QueryForm.asp. In the presence of continued, unabated interference on the downlink channel 120, the radio downlink counter 235 would reach zero (0) in one and a half (1.5) seconds or twenty seven (27) frames. In cases of continued unabated interference (when RDC reaches zero (0)), the user would detect the downlink interference and typically want to take (roam) the radio terminals 105 from one location to another location for establishing communication. However, if the radio terminal 105 is designed to report at a point when the RDC reaches zero (0), it may not be beneficial to communication systems as the system (e.g. base station 110 and/or system controller 125) may not have enough time to respond to the interference. In accordance with embodiments of the present disclosure, the radio terminal 105 is designed to report the interference such that the system would have enough time to respond to the downlink interference or, in the case of mild or intermittent interference, it can become aware of such interference before such time that the radio terminals 105 would decide on the need to take action, hence offering ability to take action before such time occurs. In one embodiment, the reporting mechanism is designed to report interference at one-third (1/3) and two-third (2/3) of RDC expiry. In this case, the radio terminal 105 would report downlink interference when the value of RDC 235 reaches two hundred and seventy (270) and one hundred and sixty two (162).

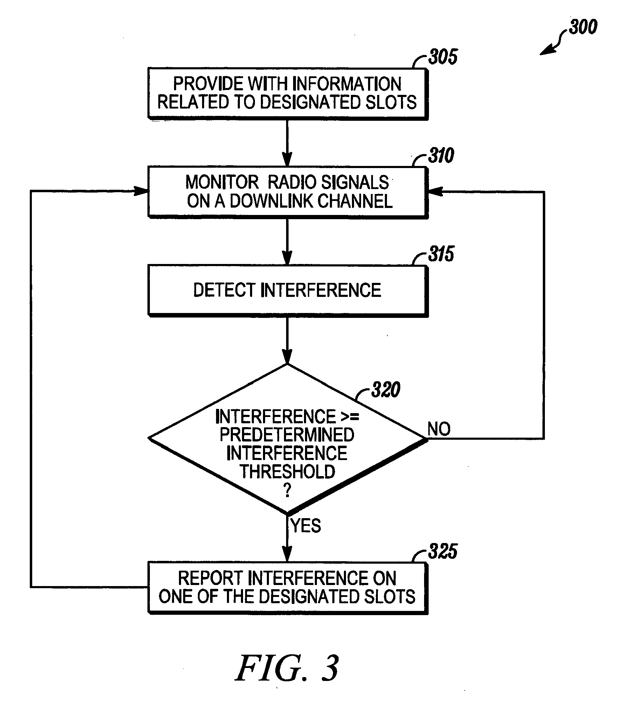

FIG. 3 is a flowchart of a method 300 for reporting downlink interference in a radio communication system 100 in accordance with some embodiments. The method 300 begins at step 305 with radio terminal 105 being provided with information related to one or more designated slots of an uplink channel 115. In accordance with some embodiments, the designated slots can be used by one or more radio terminals 105-1 through 105-n of the radio communication system 100 to report interference detected in the downlink channel 120. In one embodiment, the system controller 125 determines capacity in the uplink channel 115 for designating one or more slots of an uplink channel for collecting information about downlink interference associated with radio terminals 105 in one or more cells representing different coverage areas of the radio communication system 100. In one embodiment, an uplink portion of the uplink channel 115 is designated for interference reporting based on whether the capacity of uplink portion is either unused or is in excess. For example, the uplink portion of a symmetric traffic channel (TCH) of a downlink group call could be designated for interference reporting. The system controller 125 sends information about the designated slots (also referred to as designated uplink portion or designated uplink capacity) of the uplink channel 115 to the base station 110 which then forwards the information related to the designated slots to each of the radio terminals 105 associated with the base station 110. In yet another embodiment, the radio terminal 105 is directly programmed and/or configured with information related to the designated slots of the uplink channel 115. In such cases, the radio terminal 105 can also store the information related to the designated slots in the memory 230.

Next, at step 310, the radio terminal 105 monitors the radio signals received on a downlink channel 120 from the base station 110. At step 315, the radio terminal 105 employs various mechanisms as known in the art to detect interference in the downlink channel 120 when monitoring the radio signals. Next, at step 320, the radio terminal 105 determines whether the detected interference is greater than or equal to a predetermined interference threshold. In accordance with some embodiments, the radio terminals 105 use radio downlink counter 235 maintained in the memory 230 to determine if the detected interference is to be reported to the base station 110 based on whether the detected interference reaches the predetermined interference threshold (or a predefined value of RDC). Next, at step 325, when the detected interference reaches the predetermined interference threshold, the radio terminal 105 reports the detected interference to the base station 110 using the uplink portion designated for interference reporting i.e. using one of the designated slots. In accordance with embodiments, the radio terminal 105 randomly selects one of the designated slots of the uplink channel 115 and reports the detected interference on the randomly selected designated slot of the uplink channel 115. Optionally, the base station 110 forwards the information received in the interference report to the system controller 125 to enable the system controller 125 to process the information to take appropriate action for controlling interference. After reporting the interference at step 325, the radio terminal 105 continues to step 310 to monitor radio signals on the downlink channel 120. Returning to step 320, when the radio terminal 105 determines that the detected interference is less than the predetermined threshold, the radio terminal 105 continues to monitor radio signals to detect interference on the downlink channel 120. Although, the method 300 is described as being performed by one radio terminal 105, in practice, the method may be concurrently performed by multiple radio terminals 105-1 through 105-n for reporting interference on respective downlink channels 120-1 through 120-n.

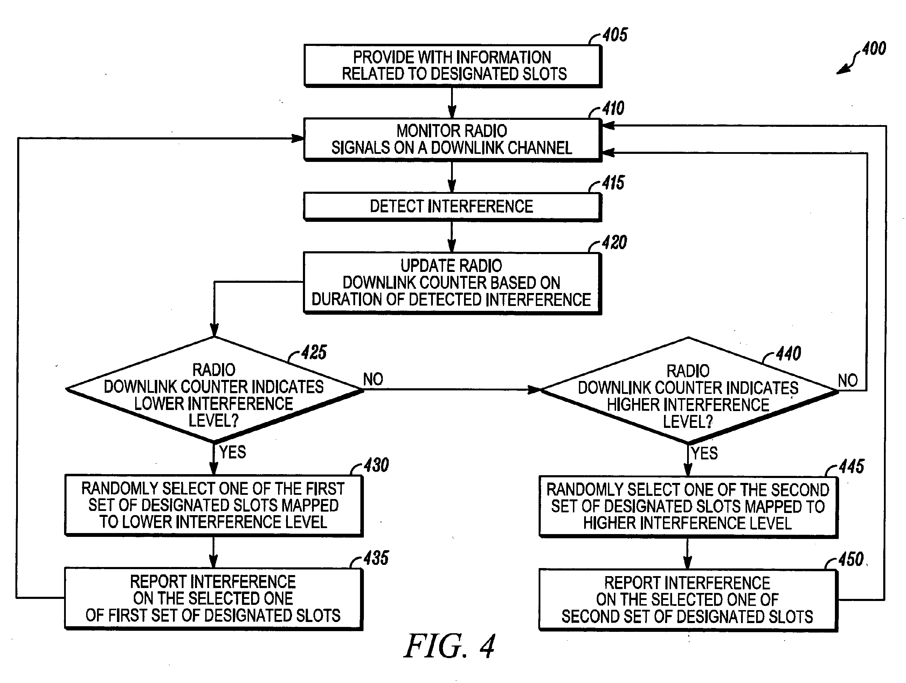

FIG. 4 is a flowchart of a method 400 for reporting downlink interference in a radio communication system 100. The method 400 begins at step 405 with radio terminal 105 being provided with information related to one or more designated slots of an uplink channel 115. In accordance with embodiments of the present disclosure, the designated slots can be used by one or more radio terminals 105-1 through 105-n of the radio communication system 100 to report interference detected in the downlink channel 120. In one embodiment, the system controller 125 determines capacity in the uplink channel 115 for designating one or more slots of an uplink channel for collecting information about downlink interference associated with radio terminals 105 in one or more cells (representing different coverage areas) of the radio communication system 100. In one embodiment, an uplink portion of the uplink channel 115 is designated for interference reporting based on whether the capacity of uplink portion is either unused or is in excess. For example, the uplink portion of a symmetric traffic channel (TCH) of a downlink group call can be designated for interference reporting. The system controller 125 sends information about the designated slots of the uplink channel 115 to the base station 110 which then forwards the information related to the designated slots to each of the radio terminals 105 associated with the base station 110. In yet another embodiment, the radio terminal 105 is programmed and/or configured with information related to the designated slots of the uplink channel 115. In such cases, the radio terminal 105 can also store the information related to the designated slots in the memory 230.

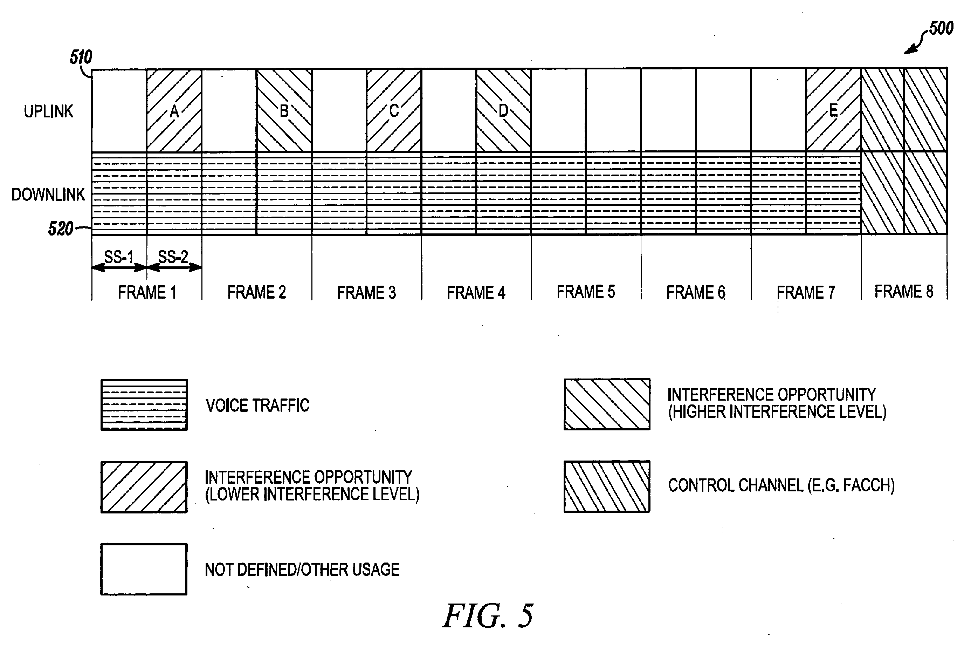

Next, at step 410, the radio terminal 105 monitors the radio signals received on a downlink channel 120 from the base station 110. At step 415, the radio terminal 105 employs various mechanisms as known in the art to detect interference in the downlink channel 120 when monitoring the radio signals. Next, at step 420, the radio terminal 105 updates the radio downlink counter 235 maintained in the memory 230 based on the duration of occurrence of detected interference. Next, at step 425, the radio terminal 105 determines whether the updated radio downlink counter 235 indicates a lower interference level. In one embodiment, the radio terminal 105 checks whether the radio downlink counter 235 reaches a first predefined level (e.g. one-third (1/3^{rd}) of RDC expiry) to determine whether the radio downlink counter 235 indicates the lower interference level. Next at step 430, when the radio terminal 105 determines that RDC 235 indicates a lower interference level, the radio terminal 105 randomly selects one of the first set of designated slots that is mapped to the lower interference level, and reports the interference on the selected one of the first set of designated subslots of the uplink channel 115 as shown in step 435. In accordance with embodiments of the present disclosure, the uplink channel 115 is divided into a plurality of slots (see FIG. 5), and further the plurality of slots are grouped into one or more sets. Each set of designated slot is then mapped to a particular interference level. The radio terminal 105 is designed to report interference by selecting a slot from a particular set of subslots which is mapped to the detected interference level. Such mapping of interference levels to a particular slot (see FIG. 5) enables the base station 110 and/or system controller 125 to readily determine the level of interference in the downlink channel 120. After reporting the interference at step 435, the radio terminal 105 continues to step 410 to monitor radio signals on the downlink channel 120.

Returning to step 425, when the radio terminal 105 determines that the radio downlink counter 235 does not indicate a lower interference level, the radio terminal proceeds to step 440 to check whether the radio downlink counter 235 indicates a higher interference level. In one embodiment, the radio terminal 105 checks whether the radio downlink counter 235 reaches a second predefined level (e.g. two-third (2/3^{rd}) of RDC expiry) to determine whether the radio downlink counter 235 indicates the higher interference level. Next at step 445, when the radio terminal 105 determines that RDC 235 indicates a higher interference level, the radio terminal 105 randomly selects one of the second set of designated slots mapped to the higher interference level, and reports the interference on the selected one of the second set of designated slots of the uplink channel 115 as shown in step 450. After reporting the interference at step 450, the radio terminal 105 continues to step 410 to monitor radio signals on the downlink channel 120. Returning to step 440, when the radio terminal 105 determines that the radio downlink counter 235 neither indicates a lower interference level nor a higher interference level, the radio terminal proceeds to step 410 to continue monitoring radio signals on a downlink channel 120.

In accordance with some embodiments, the interference report sent by the radio terminals 105 on the designated slots is a null message. In this case, since the interference levels are mapped to different set of slots, the base station 110 and/or the system controller 125 can still determine the interference levels based on the slot in which the interference is reported by the radio terminal 105, for example, by using the received signal strength (RSSI) to gauge the strength of the interference. In case, if the RSSI of the received signal is strong, the system assumes that the radio terminal 105 is close to the cell. In other words, if the interference is able to overpower the strong base station downlink, then the system determines the signal to be a strong interference signal, near to the cell. In accordance with some embodiments, the radio terminals 105 do not exercise power control during reporting of interference to enable the system (base station 110 and/or system controller 125) to interpret the true distance between the radio terminals and the base station and hence the effects of the interference from the RSSI of the reported interference.

In another embodiment, the radio terminals 105 include a location information, for example, Global Positioning System (GPS) position of the radio terminal 105 on the designated slot for reporting the downlink interference. In this case, the base station 110 and/or system controller 125 can determine a location of downlink interference based on the location information of the radio terminal 105 included in the interference report, and further use such location information for controlling the downlink interference. In yet another embodiment, the base station 110 and/or system controller can determine a location of downlink interference based on signal strength received on the designated slot of the uplink channel 115 in which the interference is reported by the radio terminal 105.

The implementation of the embodiments described herein also enables the system (base station 110 and/or system controller 125) to determine the overall effect of interference in a particular cell or a site or a region representing different cells. In accordance with some embodiments, there is a possibility for more than one radio terminals 105 to choose the same designated slot for reporting the downlink interference since the implementation of embodiments described herein allows each of the radio terminals 105 to randomly choose designated slots for interference reporting. In such cases, the use of the same designation slot for reporting interference by more than radio terminals can result in collision. In this case, the system can understand the overall effect of downlink interference in a particular cell or a site or a region representing different cells based on the energy level of the collision.

FIG. 5 shows one example implementation of a channel mapping 500 that facilitates reporting of downlink interference in a radio communication system 100. FIG. 5 particularly shows an uplink channel 510 and a downlink channel 520 used, for example, in a receive side group call that is used to feedback interference about the current downlink interference. In accordance with some embodiments, the interference reports is normally transmitted whilst the channel is traffic channel (TCH), and when the voice transmissions cease and the channel switches to a control channel, for example, fast associated control channel (FACCH), interference reports are not normally transmitted. This embodiment is discussed with reference to TCH transmissions, but it could be extended to FACCH. The uplink channel 510 and the downlink channel 520 are divided into a plurality of frames, for example frames 1 through 8 as shown in FIG. 5. Further, each of the frames 1 through 8 is divided into two subslots (SS-1 and SS-2). In accordance with some embodiment, only the second subslot (SS-2) of the designated frames is used for reporting the interference. Using second subslots (SS-2) for reporting interference enables the base station 110 to compare SS-1 and SS-2 to attempt to distinguish between uplink interference and a reporting collision.

Interference reports are designated into different subslots dependant upon which RDC threshold has been reached, enabling the system to understand the duration/extent to which interference has been present. In the example channel mapping 500 shown in FIG. 5, frames 1, 3 and 7 are used for RDC reaching 1/3 expiry and frames 2 and 4 are used for RDC 2/3 expiry level. Frames 5, 6, and 8 are unused in this example design, where frame 8 can indicate a control channel, for example, fast associated control channel (FACCH). The interference report can be a L3 protocol data unit (PDU) that contains information pertaining to the GPS position of the radio terminal 105. In accordance with some embodiments, the size of the message used for reporting interference is kept to 1 subslot size as the system would not necessarily be set up to react to granting capacity to complete the L3 message. In one embodiment, the interference report is a fire and forget message. In other words, acknowledgment is not required in response to interference reports. In other embodiments, as previously described, the interference report may be no more than a null L3 PDU. In this case, the collision RSSI (received signal strength indication) or incoming signal strength indication (ISSI)/RSSI without collision is used by the system for interpreting the (scope of the) downlink interference. To enable interference detection of control channels used in multimedia broadcast multimedia service (MBMS), for example MBMS control channel, the embodiments described herein can be expanded to allow MCCH users to report interference via the uplink capacity of other channels. For example, in the channel mapping 500 shown in FIG. 5, unused portion of TCH namely frames 5 and 6 can be designated for MCCH users for reporting detection of interference.

As shown in FIG. 5, the second subslot of frames 1, 2, 3, 4, and 7 (designated as subslot A through subslot E) are designated for interference reporting. In this example, subslots A, C, and E are mapped to lower interference level (e.g. interference burst of just over 0.5 second) and subslots B and D are mapped to higher interference level (e.g. interference burst of just over 1 second). In case, the subslots A through E are empty, it means that there is no interference reported by the radio terminals 105. In case, when the subslots A, C, and E are used by many radio terminals 105 for reporting interference burst of just over 0.5 second covering majority site footprint, the interference reports from multiple radio terminals 105 results in collision. In this case, the base station 110 and/or system controller 125 gauges the strength of interference based on the RSSI level (with collision) of the subslots A, C, and E. In case, when the subslots B and D are used by many radio terminals 105 for reporting interference burst of over 1 second covering majority site footprint, the interference reports from multiple radio terminals 105 results in collision. In this case, base station 110 and/or system controller 125 gauges the strength of interference based on the RSSI level (with collision) of the subslots B and D. In case, when some of subslots A, C, and E contain interference reports (interference burst of just over 1 second localized to small area of coverage) from a few radio terminals 105, the location of the interference is gauged by either the GPS position in the report or the RSSI level of the message. In case, when some of subslots B and D contain interference reports (interference burst of just over 1 second localized to small area of coverage) from a few radio terminals 105, the location of interference is gauged by either the GPS position in the report or the RSSI level of the message. Therefore, depending on the identity of the subslot and the number of radio terminals reporting the interference on the subslot, the system can gauge the overall effect of interference in a particular cell or a site or a region representing different cells.

In the foregoing specification, specific embodiments have been described.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, or article that comprises, has, includes, contains a list of elements does not include only those elements but may include other elements not expressly listed or inherent to such process, method, or article. An element proceeded by "comprises ...a", "has ...a", "includes ...a", "contains ...a" does not, without more constraints, preclude the existence of additional identical elements in the process, method, or article that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim.

## Claims

1. A method (300) of reporting downlink interference in a radio communication system, the method comprising:
receiving, at a radio terminal (105), or storing at the radio terminal (105), information related to one or more designated slots of an uplink channel, wherein the information maps a first set of slots of the one or more designated slots to a first interference level of downlink interference and
maps a second set of slots of the one or more designated slots to a second interference level of downlink interference;
monitoring (310), by the radio terminal (105), radio signals on a downlink channel (120) from a base station (110) for detecting interference in the downlink channel;
determining (320), by the radio terminal (105), whether the interference in the downlink channel (120) reaches a predetermined interference threshold; and
reporting (325), by the radio terminal (105), the interference on one of the one or more designated slots of the uplink channel (115) when the interference reaches the predetermined interference threshold.

2. The method of claim 1, further comprising:
reporting (435), by the radio terminal (105), the determined interference on one of the first set of slots of the one or more designated slots when the determined interference is equal to a first interference level; and
reporting (450), by the radio terminal (105), the determined interference on one of the second set of slots when the determined interference is equal to a second interference level.

3. The method of claim 2, further comprising:
determining (320), by either the base station (110) or a system controller (125), a level of interference of downlink interference based on the slot in which the interference is reported by the radio terminal (105).

4. The method of claim 2, further comprising:
maintaining a radio downlink counter (235), by the radio terminal (105), wherein the radio downlink counter (235) is set to a default value during power up of the radio terminal (105);
updating (420), by the radio terminal (105), the radio downlink counter (235) to a value based on duration of occurrence of interference on the downlink channel;
detecting, by the radio terminal (105), the first interference level of downlink interference when the radio downlink counter (235) reaches a first predefined level; and
detecting, by the radio terminal (105), the second interference level of downlink interference when the radio downlink counter (235) reaches a second predefined level.

5. The method of claim 1, wherein reporting the interference further comprises sending, by the radio terminal (105), a location information of the radio terminal (105), during reporting of the detected interference, on the one of the designated slots of the uplink channel.

6. The method of claim 5, further comprising:
determining, by either the base station (110) or a system controller (125), the location of downlink interference based on the location information of the radio terminal (105) sent by the radio terminal (105) during reporting of the detected interference on the one of the designated slots of the uplink channel.

7. The method of claim 1, further comprising:
determining, by either the base station (110) or a system controller (125), a location of downlink interference based on signal strength received, during reporting of the detected interference, on the one of the one or more designated slots of the uplink channel.

8. The method of claim 1, further comprising:
detecting, by at least one another radio terminal (105) in the radio communication system, interference in the downlink channel; and
reporting, by the radio terminal (105) and the at least one another radio terminal (105), detected interference on a same slot of the one or more designated slots of the uplink channel (115) when the detected interference reaches the predetermined threshold.

9. The method of claim 8, further comprising:
determining, by either the base station (110) or a system controller (125), an effect of interference in a particular cell or a site representing different cells based on level of received signal strength indication corresponding to the interference reported in the same slot by the radio terminal (105) and the at least one another radio terminal (105).

10. The method of claim 1, further comprising, at a system controller (125) or the base station (110):
identifying one or more unused uplink channels in the radio communication system;
dividing the one or more unused uplink channels into a plurality of frames;
dividing each of the plurality of frames into two subslots;
designating one of the two subslots in at least one of the plurality of frames to enable the radio terminals in the radio communication system to report interference to the base station (110); and
sending information related to the designated subslots to the radio terminals in the radio communication system.

11. The method of claim 1, wherein the reported interference is a null message on one of the one or more designated slots of the uplink channel.

12. A radio terminal (105), comprising:
a transmitter configured to transmit radio signals on an uplink channel (115) to a base station (110);
a receiver configured to receive radio signals on a downlink channel (120) from the base station (110) and further receiving information related to one or more designated slots of an uplink channel (115) from a base station (110), wherein the information maps a first set of slots of the one or more designated slots to a first interference level of downlink interference and maps a second set of slots of the one or more designated slots to a second interference level of downlink interference; and
a processor (205) communicatively coupled to the transmitter and the receiver, the processor (205) configured to:
monitor (310) radio signals received on the downlink channel (120) for detecting interference in the downlink channel,
determine (320) whether the interference in the downlink channel (120) reaches a predetermined interference threshold, and
enable (325) the transmitter to report the interference on one of the one or more designated slots of the uplink channel (115) when the interference reaches the predetermined interference threshold.

13. The radio terminal (105) of claim 12, wherein the processor (205) is further configured to:
enable the transmitter to report (435) the determined interference on the first set of slots of the one or more designated slots of the uplink channel (115) when the determined interference is equal to a first interference level, and
enable the transmitter to report (450) the determined interference on the second set of slots of the one or more designated slots of the uplink channel (115) when the determined interference is equal to a second interference level.

14. The radio terminal (105) of claim 13, wherein the processor (205) is further configured to:
maintain a radio downlink counter (235) for the radio terminal (105),
set the radio downlink counter (235) to a default value during power up of the radio terminal (105),
update (420) the radio downlink counter (235) to a value based on duration of occurrence of interference on the downlink channel,
detect (425) the first interference level of downlink interference when the radio downlink counter (235) reaches a first predefined level, and
detect (440) the second interference level of downlink interference when the radio downlink counter (235) reaches a second predefined level.

15. The radio terminal (105) of claim 14, wherein the transmitter is further configured to send a location information of the radio terminal (105) during reporting of the detected interference on the one of the one or more designated slots of the uplink channel.

## Patentansprüche

1. Verfahren (300) zur Meldung einer Downlink-Interferenz in einem Funkkommunikationssystem, wobei das Verfahren umfasst:
Empfangen, bei einem Funkendgerät (105), oder Speichern, bei dem Funkendgerät (105), von Informationen bezüglich eines oder mehrerer designierter Schlitze eines Uplink-Kanals, wobei die Informationen einen ersten Satz von Schlitzen von dem einen oder den mehreren designierten Schlitzen auf einem ersten Interferenzpegel einer Downlink-Interferenz abbilden und einen zweiten Satz von Schlitzen von dem einen oder den mehreren designierten Schlitzen auf einen zweiten Interferenzpegel einer Downlink-Interferenz abbilden;
Überwachen (310), durch das Funkendgerät (105), von Funksignalen auf einem Downlink-Kanal (120) von einer Basisstation (110) zur Erfassung einer Interferenz in dem Downlink-Kanal;
Bestimmen (320), durch das Funkendgerät (105), ob die Interferenz in dem Downlink-Kanal (120) einen vorbestimmten Interferenzschwellenwert erreicht; und
Melden (325), durch das Funkendgerät (105), der Interferenz auf einem des einen oder
der mehreren designierten Schlitze des Uplink-Kanals (115), wenn die Interferenz den vorbestimmten Interferenzschwellenwert erreicht.

2. Verfahren gemäß Anspruch 1, das weiterhin umfasst:
Melden (435), durch das Funkendgerät (105), der bestimmten Interferenz auf einem von dem ersten Satz von Schlitzen von dem einen oder den mehreren designierten Schlitzen, wenn die bestimmte Interferenz gleich dem ersten Interferenzpegel ist; und
Melden (450), durch das Funkendgerät (105), der bestimmten Interferenz auf einem von dem zweiten Satz von Schlitzen, wenn die bestimmte Interferenz gleich einem zweiten Interferenzpegel ist.

3. Verfahren gemäß Anspruch 2, das weiterhin umfasst:
Bestimmen (320), durch entweder die Basisstation (110) oder eine Systemsteuerung (125), eines Interferenzpegels einer Downlink-Interferenz, basierend auf dem Schlitz, in dem die Interferenz durch das Funkendgerät (105) gemeldet wird.

4. Verfahren gemäß Anspruch 2, das weiterhin umfasst:
Aufrechterhalten eines Funk-Downlink-Zählers (235), durch das Funkendgerät (105), wobei der Funk-Downlink-Zähler (235) während des Einschaltens des Funkendgerätes (105) auf einen Standardwert eingestellt wird;
Aktualisieren (420), durch das Funkendgerät (105), des Funk-Downlink-Zählers (235) auf einen Wert, der auf einer Dauer des Auftretens einer Interferenz auf dem Downlink-Kanal basiert;
Erfassen, durch das Funkendgerät (105), des ersten Interferenzpegels einer Downlink-Interferenz, wenn der Funk-Downlink-Zähler (235) einen ersten vorbestimmten Pegel erreicht; und
Erfassen, durch das Funkendgerät (105), des zweiten Interferenzpegels einer Downlink-Interferenz, wenn der Funk-Downlink-Zähler (235) einen zweiten vorbestimmten Pegel erreicht.

5. Verfahren gemäß Anspruch 1, wobei eine Meldung der Interferenz weiterhin umfasst: Senden, durch das Funkendgerät (105), einer Standortinformation des Funkendgerätes (105), während einer Meldung der erfassten Interferenz, auf dem einen von den designierten Schlitzen des Uplink-Kanals.

6. Verfahren gemäß Anspruch 5, das weiterhin umfasst:
Bestimmen, durch entweder die Basisstation (110) oder eine Systemsteuerung (125), des Standortes einer Downlink-Interferenz, basierend auf der Standortinformation des Funkendgerätes (105), die durch das Funkendgerät (105) während einer Meldung der erfassten Interferenz auf dem einen von den designierten Schlitzen des Uplink-Kanals gesendet wird.

7. Verfahren gemäß Anspruch 1, das weiterhin umfasst:
Bestimmen, durch entweder die Basisstation (110) oder eine Systemsteuerung (125), eines Standortes einer Downlink-Interferenz, basierend auf einer Signalstärke, die während einer Meldung der erfassten Interferenz auf dem einen von dem einen oder den mehreren designierten Schlitzen des Uplink-Kanals empfangen wird.

8. Verfahren gemäß Anspruch 1, das weiterhin umfasst:
Erfassen, durch mindestens ein weiteres Funkendgerät (105) in dem Funkkommunikationssystem, einer Interferenz in dem Downlink-Kanal; und
Melden, durch das Funkendgerät (105) und das mindestens eine weitere Funkendgerät (105), einer erfassten Interferenz auf einem selben Schlitz von dem einen oder den mehreren designierten Schlitzen des Uplink-Kanals (115), wenn die erfasste Interferenz den vorbestimmten Schwellenwert erreicht.

9. Verfahren gemäß Anspruch 8, das weiterhin umfasst:
Bestimmen, durch entweder die Basisstation (110) oder eine Systemsteuerung (125), einer Wirkung einer Interferenz in einer bestimmten Zelle, oder einer Seite, die verschiedene Zellen darstellt, basierend auf einem Pegel einer empfangenen Signalstärkenanzeige, bezüglich der Interferenz, die in dem selben Schlitz durch das Funkendgerät (105) und das mindestens eine weitere Funkendgerät (105) gemeldet wird.

10. Verfahren gemäß Anspruch 1, das weiterhin umfasst, bei einer Systemsteuerung (125), oder der Basisstation (110):
Identifizieren eines oder mehrerer ungenutzter Uplink-Kanäle in dem Funkkommunikationssystem;
Teilen des einen oder der mehreren ungenutzten Uplink-Kanäle in eine Mehrzahl von Rahmen;
Teilen jedes von der Mehrzahl von Rahmen in zwei Unterschlitze;
Designieren eines von den zwei Unterschlitzen in mindestens einem von der Mehrzahl von Rahmen, um die Funkendgeräte in dem Funkkommunikationssystem zu befähigen, eine Interferenz an die Basisstation (110) zu melden; und
Senden von Informationen bezüglich der designierten Unterschlitze an die Funkendgeräte in dem Funkkommunikationssystem.

11. Verfahren gemäß Anspruch 1, wobei die gemeldete Interferenz eine Null-Meldung auf einem von dem einen oder den mehreren designierten Schlitzen des Uplink-Kanals ist.

12. Funkendgerät (105), das umfasst:
einen Sender, der geeignet ist, Funksignale auf einem Uplink-Kanal (115) an eine Basisstation (110) zu übertragen;
einen Empfänger, der geeignet ist, um Funksignale auf einem Downlink-Kanal (120) von der Basisstation (110) zu empfangen und weiterhin Informationen bezüglich eines oder mehrerer Schlitze eines Uplink-Kanals (115) von einer Basisstation (110) zu empfangen, wobei die Informationen einen ersten Satz von Schlitzen von dem einen oder den mehreren designierten Schlitzen auf einen ersten Interferenzpegel einer Downlink-Interferenz abbilden und einen zweiten Satz von Schlitzen von dem einen oder den mehreren designierten Schlitzen auf einen zweiten Interferenzpegel einer Downlink-Interferenz abbilden; und
einen Prozessor (205), der kommunikativ an den Sender und den Empfänger gekoppelt ist, wobei der Prozessor (205) geeignet ist:
Funksignale, die auf dem Downlink-Kanal (120) empfangen werden, zur Erfassung einer Interferenz in dem Downlink-Kanal zu überwachen (310),
zu bestimmen (320), ob die Interferenz in dem Downlink-Kanal (120) einen vorbestimmten Interferenzschwellenwert erreicht, und
den Sender zu befähigen (325), die Interferenz auf einem von dem einen oder
den mehreren designierten Schlitzen des Uplink-Kanals (115) zu melden, wenn die Interferenz den vorbestimmten Interferenzschwellenwert erreicht.

13. Funkendgerät (105) gemäß Anspruch 12, wobei der Prozessor (205) weiterhin geeignet ist:
den Sender zu befähigen, die bestimmte Interferenz auf dem ersten Satz von Schlitzen von dem einen oder den mehreren designierten Schlitzen des Uplink-Kanals (115) zu melden (435), wenn die bestimmte Interferenz gleich einem ersten Interferenzpegel ist, und
den Sender zu befähigen, die bestimmte Interferenz auf den zweiten Satz von Schlitzen von dem einen oder den mehreren designierten Schlitzen des Uplink-Kanals (115) zu melden (450), wenn die bestimmte Interferenz gleich einem zweiten Interferenzpegel ist.

14. Funkendgerät (105) gemäß Anspruch 13, wobei der Prozessor (205) weiterhin geeignet ist:
einen Funk-Downlink-Zähler (235) für das Funkendgerät (105) aufrechtzuerhalten,
den Funk-Downlink-Zähler (235) während des Einschaltens des Funkendgerätes (105) auf einen Standardwert einzustellen,
den Funk-Downlink-Zähler (235) auf einen Wert zu aktualisieren (420), der auf einer Dauer des Auftretens einer Interferenz auf dem Downlink-Kanal basiert,
den ersten Interferenzpegel einer Downlink-Interferenz zu erfassen (425), wenn der Funk-Downlink-Zähler (235) einen ersten vorbestimmten Pegel erreicht, und
den zweiten Interferenzpegel einer Downlink-Interferenz zu erfassen (440), wenn der Funk-Downlink-Zähler (235) einen zweiten vorbestimmten Pegel erreicht.

15. Funkendgerät (105) gemäß Anspruch 14, wobei der Sender weiterhin geeignet ist, während einer Meldung einer erfassten Interferenz auf dem einen von dem einen oder den mehreren designierten Schlitzen des Uplink-Kanals eine Standortinformation des Funkendgerätes (105) zu senden.

## Revendications

1. Procédé (300) de rapport d'interférence de liaison descendante dans un système de radiocommunication, le procédé comprenant :
la réception, au niveau d'un terminal radio (105), ou la mémorisation au niveau du terminal radio (105), d'informations associées à une ou plusieurs tranches désignées d'un canal de liaison montante, dans lequel les informations mappent un premier ensemble de tranches desdites une ou plusieurs tranches désignées vers un premier niveau d'interférence d'interférence de liaison descendante et mappent un deuxième ensemble de tranches desdites une ou plusieurs tranches désignées vers un deuxième niveau d'interférence de liaison descendante ;
la surveillance (310), par le terminal radio (105), des signaux radio sur un canal de liaison descendante (120) provenant d'une station de base (110) pour détecter une interférence dans le canal de liaison descendante ;
la détermination (320), par le terminal radio (105), si l'interférence dans le canal de liaison descendante (120) atteint un seuil d'interférence prédéterminé ; et
le rapport (325), par le terminal radio (105), de l'interférence sur l'une desdites une ou plusieurs tranches désignées du canal de liaison montante (115) lorsque l'interférence atteint le seuil d'interférence prédéterminé.

2. Procédé selon la revendication 1, comprenant en outre :
le rapport (435), par le terminal radio (105), de l'interférence déterminée sur l'une du premier ensemble de tranches desdites une ou plusieurs tranches désignées lorsque l'interférence déterminée est égale à un premier niveau d'interférence ; et
le rapport (450), par le terminal radio (105), de l'interférence déterminée sur l'une du deuxième ensemble de tranches lorsque l'interférence déterminée est égale à un deuxième niveau d'interférence.

3. Procédé selon la revendication 2, comprenant en outre :
la détermination (320), soit par la station de base (110), soit par un contrôleur de système (125), d'un niveau d'interférence d'interférence de liaison descendante sur la base de la tranche dans laquelle l'interférence est rapportée par le terminal radio (105).

4. Procédé selon la revendication 2, comprenant en outre :
le maintien d'un compteur de liaison radio descendante (235), par le terminal radio (105), dans lequel le compteur de liaison radio descendante (235) est initialisé à une valeur par défaut pendant la mise sous tension du terminal radio (105) ;
la mise à jour (420), par le terminal radio (105), du compteur de liaison radio descendante (235) à une valeur basée sur la durée d'apparition de l'interférence sur le canal de liaison descendante ;
la détection, par le terminal radio (105), du premier niveau d'interférence d'interférence de liaison descendante lorsque le compteur de liaison radio descendante (235) atteint un premier niveau prédéfini ; et
la détection, par le terminal radio (105), du deuxième niveau d'interférence d'interférence de liaison descendante lorsque le compteur de liaison radio descendante (235) atteint un deuxième niveau prédéfini.

5. Procédé selon la revendication 1, dans lequel le rapport de l'interférence comprend en outre l'envoi, par le terminal radio (105), d'informations d'emplacement du terminal radio (105), pendant le rapport de l'interférence détectée, sur ladite une des tranches désignées du canal de liaison montante.

6. Procédé selon la revendication 5, comprenant en outre :
la détermination, soit par la station de base (110), soit par un contrôleur de système (125), de l'emplacement de l'interférence de liaison descendante sur la base des informations d'emplacement du terminal radio (105) envoyées par le terminal radio (105) pendant le rapport de l'interférence détectée sur ladite une des tranches désignées du canal de liaison montante.

7. Procédé selon la revendication 1, comprenant en outre :
la détermination, soit par la station de base (110), soit par un contrôleur de système (125), d'un emplacement d'interférence de liaison descendante sur la base d'une intensité de signal reçue, pendant le rapport de l'interférence détectée, sur ladite une desdites une ou plusieurs tranches désignées du canal de liaison montante.

8. Procédé selon la revendication 1, comprenant en outre :
la détection, par au moins un autre terminal radio (105) dans le système de radiocommunication, d'une interférence dans le canal de liaison descendante ; et
le rapport, par le terminal radio (105) et ledit au moins un autre terminal radio (105), de l'interférence détectée sur une même tranche desdites une ou plusieurs tranches désignées du canal de liaison montante (115) lorsque l'interférence détectée atteint le seuil prédéterminé.

9. Procédé selon la revendication 8, comprenant en outre :
la détermination, soit par la station de base (110), soit par un contrôleur de système (125), d'un effet d'interférence dans une cellule particulière ou un site représentant différentes cellules sur la base d'un niveau d'indication d'intensité de signal reçue correspondant à l'interférence rapportée dans la même tranche par le terminal radio (105) et ledit au moins un autre terminal radio (105).

10. Procédé selon la revendication 1, comprenant en outre, au niveau d'un contrôleur de système (125) ou de la station de base (110) :
l'identification d'un ou de plusieurs canaux de liaison montante non utilisés dans le système de radiocommunication ;
la division desdits un ou plusieurs canaux de liaison montante non utilisés en une pluralité de trames ;
la division de chacune de la pluralité de trames en deux tranches secondaires ;
la désignation de l'une des deux tranches secondaires dans au moins l'une de la pluralité de trames pour permettre aux terminaux radio dans le système de radiocommunication de rapporter une interférence à la station de base (110) ; et
l'envoi d'informations associées aux tranches secondaires désignées aux terminaux radio dans le système de radiocommunication.

11. Procédé selon la revendication 1, dans lequel l'interférence rapportée est un message nul sur l'une desdites une ou plusieurs tranches désignées du canal de liaison montante.

12. Terminal radio (105), comprenant :
un émetteur configuré pour émettre des signaux radio sur un canal de liaison montante (115) vers une station de base (110) ;
un récepteur configuré pour recevoir des signaux radio sur un canal de liaison descendante (120) de la station de base (110) et en outre pour recevoir des informations associées à une ou plusieurs tranches désignées d'un canal de liaison montante (115) d'une station de base (110), dans lequel les informations mappent un premier ensemble de tranches desdites une ou plusieurs tranches désignées vers un premier niveau d'interférence d'interférence de liaison descendante et mappent un deuxième ensemble de tranches desdites une ou plusieurs tranches désignées vers un deuxième niveau d'interférence d'interférence de liaison descendante ; et
un processeur (205) couplé en communication à l'émetteur et au récepteur, le processeur (205) étant configuré pour :
surveiller (310) les signaux radio reçus sur le canal de liaison descendante (120) pour détecter une interférence dans le canal de liaison descendante,
déterminer (320) si l'interférence dans le canal de liaison descendante (120) atteint un seuil d'interférence prédéterminé, et
permettre (325) à l'émetteur de rapporter l'interférence sur l'une desdites une ou plusieurs tranches désignées du canal de liaison montante (115) lorsque l'interférence atteint le seuil d'interférence prédéterminé.

13. Terminal radio (105) selon la revendication 12, dans lequel le processeur (205) est en outre configuré pour :
permettre à l'émetteur de rapporter (435) l'interférence déterminée sur le premier ensemble de tranches desdites une ou plusieurs tranches désignées du canal de liaison montante (115) lorsque l'interférence déterminée est égale à un premier niveau d'interférence, et
permettre à l'émetteur de rapporter (450) l'interférence déterminée sur le deuxième ensemble de tranches desdites une ou plusieurs tranches désignées du canal de liaison montante (115) lorsque l'interférence déterminée est égale à un deuxième niveau d'interférence.

14. Terminal radio (105) selon la revendication 13, dans lequel le processeur (205) est en outre configuré pour :
maintenir un compteur de liaison radio descendante (235) pour le terminal radio (105),
initialiser le compteur de liaison radio descendante (235) à une valeur par défaut pendant la mise sous tension du terminal radio (105),
mettre à jour (420) le compteur de liaison radio descendante (235) à une valeur basée sur une durée d'apparition de l'interférence sur le canal de liaison descendante,
détecter (425) le premier niveau d'interférence d'interférence de liaison descendante lorsque le compteur de liaison radio descendante (235) atteint un premier niveau prédéfini, et
détecter (440) le deuxième niveau d'interférence d'interférence de liaison descendante lorsque le compteur de liaison radio descendante (235) atteint un deuxième niveau prédéfini.

15. Terminal radio (105) selon la revendication 14, dans lequel l'émetteur est en outre configuré pour envoyer des informations d'emplacement du terminal radio (105) pendant le rapport de l'interférence détectée sur ladite une desdites une ou plusieurs tranches désignées du canal de liaison montante.
